(19) Europäisches Patentamt
European Patent Office
Office européen des brevets

(11) **EP 3 904 916 B1**

(12) **EUROPEAN PATENT SPECIFICATION**

(45) Date of publication and mention
of the grant of the patent:
**06.11.2024 Bulletin 2024/45**

(21) Application number: **19905534.4**

(22) Date of filing: **10.10.2019**

(51) International Patent Classification (IPC):
*G01V 8/00* (2006.01)    *G01S 13/00* (2006.01)
*G01S 7/40* (2006.01)    *G01S 13/86* (2006.01)
*G01S 13/88* (2006.01)    *G01S 13/89* (2006.01)

(52) Cooperative Patent Classification (CPC):
**G01S 13/867; G01S 7/40; G01S 7/4078;
G01S 7/4091; G01S 13/887; G01S 13/89;
G01V 8/005**

(86) International application number:
**PCT/CN2019/110334**

(87) International publication number:
**WO 2020/134326 (02.07.2020 Gazette 2020/27)**

(54) **MILLIMETER WAVE/TERAHERTZ WAVE IMAGING APPARATUS, AND DETECTION METHOD THEREOF**

MILLIMETERWELLEN/TERAHERTZWELLEN-BILDGEBUNGSVORRICHTUNG UND ÜBERPRÜFUNGSVERFAHREN

DISPOSITIF D'IMAGERIE À ONDES MILLIMÉTRIQUES/TÉRAHERTZ ET PROCÉDÉ DE VÉRIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2018 CN 201811654174
29.12.2018 CN 201811654169**

(43) Date of publication of application:
**03.11.2021 Bulletin 2021/44**

(73) Proprietors:
• **Tsinghua University
Beijing 100084 (CN)**
• **Nuctech Company Limited
TongFang Building
Shuangqinglu
Haidian District
Beijing 100084 (CN)**

(72) Inventors:
• **CHEN, Zhiqiang
Beijing 100084 (CN)**
• **ZHAO, Ziran
Beijing 100084 (CN)**
• **YOU, Yan
Beijing 100084 (CN)**
• **LI, Yuanjing
Beijing 100084 (CN)**
• **MA, Xuming
Beijing 100084 (CN)**
• **WU, Jian
Beijing 100084 (CN)**
• **JIN, Yingkang
Beijing 100084 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(56) References cited:
WO-A1-2012/008583    WO-A1-2012/008583
CN-A- 102 313 907    CN-A- 107 976 675
CN-A- 108 761 552    CN-A- 108 761 552
CN-A- 109 444 977    CN-A- 109 870 738
CN-U- 209 296 945    CN-U- 209 296 946
US-A- 5 438 336

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **MENG YANG ET AL: "Passive Millimeter Wave Imaging System Based on Helical Scanning", SCIENTIFIC REPORTS, 18 May 2018 (2018-05-18), England, pages 1 - 12, XP055950634, Retrieved from the Internet <URL:https://www.nature.com/articles/s41598-018-25637-9.pdf> [retrieved on 20220810], DOI: 10.1038/s41598-018-25637-9**
- **PENG, YONGSHENG: "Research on Channel Equalization and Contour Extraction Algorithm for Passive Millimeter Wave and Terahertz Imaging", MASTER THESIS, no. 09, 15 September 2018 (2018-09-15), pages 1 - 80, XP009521827, ISSN: 1674-0246**

**Description**

**CROSS REFERENCE TO RELATED APPLICATIONS**

This application claims priority to Chinese patent Applications No. CN201811654174.4 and CN201811654169.3, filed on December 29, 2018.

**TECHNICAL FIELD**

The present disclosure relates to a field of imaging technology, and in particular to a millimeter wave/terahertz wave imaging apparatus, a method of detecting a human body or an article by using the millimeter wave/terahertz wave imaging apparatus, and a method of calibrating the millimeter wave/terahertz wave imaging apparatus.

**BACKGROUND**

Human body security inspection technology based on passive millimeter wave/terahertz wave has unique advantages. It realizes imaging by detecting a millimeter wave/terahertz wave radiation of a target so as to perform security inspection on a human body (without active radiation), and realizes a detection of a hidden dangerous article by using a penetration ability of the millimeter wave/terahertz wave. However, the existing millimeter wave/terahertz wave imaging apparatus has low working efficiency.

In addition, a focal plane array imaging system requires that all detector channels have good consistency, and therefore all detector channels shall be calibrated in real time. Channel consistency includes two aspects, that is, for the same brightness temperature detector, a channel output voltage is consistent, and for the same brightness temperature variable, the channel output voltage changes the same. The existing terahertz wave imaging apparatus usually uses remote air for calibration. However, since airflow may bring about random changes in temperature, this calibration is unreliable.

CN 108 761 552 A discloses an active millimeter wave human body security imaging system with dual channel synchronous detection, including a smooth metal reflective surface, an antenna transceiver assembly, a horizontal turntable, a longitudinal turntable, a longitudinal fiber sensor, two longitudinal fiber optic sensor flaps, a data processing module, a computer, a scan control unit and a millimeter wave transceiver module. The data output end of the millimeter wave transceiver module is connected to the data processing module, and the output of the data processing module is connected to the computer for data processing and image restoration.

**SUMMARY**

An objective of the present disclosure is to solve at least one aspect of the above-mentioned problems and defects existing in the related art.

According to the present invention, there is provided a millimeter wave/terahertz wave imaging apparatus as set forth in claim 1. The millimeter wave/terahertz wave imaging apparatus according to an embodiment includes a quasi-optical assembly and a millimeter wave/terahertz wave detector array, the quasi-optical assembly is configured to reflect a millimeter wave/terahertz wave radiated or reflected by a first inspected object and a second inspected object and converge the millimeter wave/terahertz wave onto the millimeter wave/terahertz wave detector array, the quasi-optical assembly includes a reflector; the first inspected object and the second inspected object are respectively located on opposite sides of the reflector, and the reflector is rotatable about a horizontal axis to respectively receive and reflect a millimeter wave/terahertz wave from parts of the first inspected object at different vertical positions of a first field of view and a millimeter wave/terahertz wave from parts of the second inspected object at different vertical positions of a second field of view; and the millimeter wave/terahertz wave detector array is configured to receive the millimeter wave/terahertz wave from the quasi-optical assembly.

In some embodiments, the millimeter wave/terahertz wave imaging apparatus further includes a housing, the quasi-optical assembly and the millimeter wave/terahertz wave detector array are located within the housing, and a first window for the millimeter wave/terahertz wave from the first inspected object to pass through and a second window for the millimeter wave/terahertz wave from the second inspected object to pass through are provided respectively on opposite sidewalls of the housing.

In some embodiments, a rotating shaft is provided on a back of the reflector, and both ends of the rotating shaft are rotatably connected to the housing.

In some embodiments, the millimeter wave/terahertz wave imaging apparatus further includes a driving device configured to drive the rotating shaft to rotate.

In some embodiments, the millimeter wave/terahertz wave imaging apparatus further includes an angular displacement measuring mechanism configured to detect an angular displacement of the reflector in real time.

In some embodiments, the millimeter wave/terahertz wave imaging apparatus further includes:

a display device connected to the data processing device and configured to receive and display the millimeter wave/terahertz wave images from the data processing device.

According to the present invention, the millimeter wave/terahertz wave imaging apparatus further includes a calibration source provided on an object plane of the quasi-optical assembly, the data processing device is configured to receive calibration data for the calibration source from the millimeter wave/terahertz wave detector array, and update the image data for the first inspected object and the image data for the second inspected object based on the calibration data received.

According to the present invention, a length direction of the calibration source is parallel to the horizontal axis of the reflector, and a length of the calibration source is greater than or equal to a size of a field of view of the millimeter wave/terahertz wave detector array in a direction parallel to the horizontal axis.

In some embodiments, a millimeter wave/terahertz wave emitted by the calibration source is reflected by the reflector to the millimeter wave/terahertz wave detector array.

In some embodiments, the calibration source is a wave absorbing material, a black body, or a semiconductor refrigerator.

In some embodiments, the millimeter wave/terahertz wave imaging apparatus further includes an optical camera device, the optical camera device includes a first optical camera device configured to capture an optical image of the first inspected object and a second optical camera device configured to capture an optical image of the second inspected object, and the first optical camera device and the second optical camera device are connected to the display device.

In some embodiments, the display device includes a display screen including a first display area for displaying the millimeter wave/terahertz wave image and a second display area for displaying the optical image captured by the optical camera device.

In some embodiments, the millimeter wave/terahertz wave imaging apparatus further includes an alarm device connected to the data processing device and configured to give an alarm indicating that the millimeter wave/terahertz wave image contains a suspicious object, when the data processing device recognizes the suspicious object in the millimeter wave/terahertz wave image.

According to another aspect of the present invention, there is further provided a method of detecting a human body or an article by using the millimeter wave/terahertz wave imaging apparatus described above as set forth in claim 6. The method according to an embodiment includes:

step S1 of driving a reflector to rotate around a horizontal axis, receiving image data for a first inspected object by a millimeter wave/terahertz wave detector array when the reflector rotates to a first detection area, and receiving image data for a second inspected object by the millimeter wave/terahertz wave detector array when the reflector rotates to a second detection area;

step S2 of transmitting the image data for the first inspected object and the image data for the second inspected object received by the millimeter wave/terahertz wave detector array to a data processing device; and

step S3 of reconstructing the image data for the first inspected object and the image data for the second inspected object by using the data processing device so as to generate a millimeter wave/terahertz wave image of the first inspected object and a millimeter wave/terahertz wave image of the second inspected object.

In the present invention, the method further includes: prior to the step S3,

receiving calibration data for a calibration source by the millimeter wave/terahertz wave detector array when the reflector rotates to a calibration area; and

updating the image data for the first inspected object and the image data for the second inspected object received, based on the calibration data for the calibration source received.

In some embodiments, the updating the image data for the first inspected object and the image data for the second inspected object received, based on the calibration data for the calibration source received includes:

calculating an average value $\overline{V}$ of a plurality of measurement output voltages of all channels of the millimeter wave/terahertz wave detector array in the calibration area; and

calculating calibrated data in the detection area of each channel as data $V_i$ acquired in the detection area of the each channel minus the average value $\overline{V}$ and then divided by the gain calibration coefficient $a_i$ of the each channel.

In some embodiments, the updating the image data for the first inspected object and the image data for the second inspected object received, based on the calibration data for the calibration source received includes:

measuring a voltage value $V_{air}(i)$ of air by using the millimeter wave/terahertz wave detector array, iE[1, number of channels], and calculating an average voltage value $\overline{V}_{air}$ of the air in all channels;

setting a temperature of the calibration source to have a difference from a temperature of the air, measuring a voltage value $V_{cal}(i)$ of the calibration source by using the millimeter wave/terahertz wave detector array, ie[1, number of channels], calculating an average voltage value $\overline{V}_{cal}$ of the calibration source of all the channels, and calculating a gain calibration coefficient $a_i$ and an offset calibration coefficient $b_i$ of each channel by equations of:

$$\overline{V}_{air} = a_i \times T_{air}(i) + b_i$$

$$\overline{V}_{cal} = a_i \times T_{air}(i) + b_i$$

calculating calibrated data in the detection area of the each channel as an absolute value of $(V_i - \overline{V}_{cal}) \cdot / (\overline{V}_{air} - \overline{V}_{cal})$, where $V_i$ is data acquired in the detection area of the each channel.

In some embodiments, the method further includes step S4 of determining whether the first inspected object and the second inspected object is carrying a suspicious object, identifying a position of the suspicious object if any, and outputting a result, after generating the millimeter wave/terahertz wave image of the first inspected object and the millimeter wave/terahertz wave image of the second inspected object.

According to an example useful for understanding the present invention, there is provided a millimeter wave/terahertz wave imaging apparatus, including a housing, a data processing device, as well as a calibration source, a quasi-optical assembly and a millimeter wave/terahertz wave detector array located within the housing, the housing is provided with a window for a millimeter wave/terahertz wave radiated or reflected by an inspected object to pass through; the quasi-optical assembly is configured to reflect the millimeter wave/terahertz wave from the inspected object and converge the millimeter wave/terahertz wave to the millimeter wave/terahertz wave detector array, the quasi-optical assembly includes a reflector configured to receive and reflect the millimeter wave/terahertz wave from the inspected object, the reflector is rotatably connected to the housing to reflect the millimeter wave/terahertz wave from parts of the inspected object at different positions in a field of view; the calibration source is located on an object plane of the quasi-optical assembly; the millimeter wave/terahertz wave detector array is configured to receive a millimeter wave/terahertz wave from the quasi-optical assembly and a millimeter wave/terahertz wave from the calibration source; and the data processing device is connected to the millimeter wave/terahertz wave detector array so as to receive image data for the inspected object from the millimeter wave/terahertz wave detector array and calibration data for the calibration source, and update millimeter wave/terahertz wave image data for the inspected object based on the calibration data.

According to an example useful for understanding the present invention, there is further provided a method of calibrating the millimeter wave/terahertz wave imaging apparatus described above, including:

driving the reflector to rotate, receiving image data for the inspected object by the millimeter wave/terahertz wave detector array when the reflector rotates to a detection area, receiving calibration data for the calibration source by the millimeter wave/terahertz wave detector array when the reflector rotates to a calibration area; and

updating the image data for the inspected object received, based on the calibration data for the calibration source received.

In some examples useful for understanding the present invention, the updating the image data for the inspected object received, based on the calibration data for the calibration source received includes:

calculating an average value $\overline{V}(n)$ of a plurality of measurement output voltages of all channels of the millimeter wave/terahertz wave detector array in the calibration area; and

calculating calibrated data in the detection area of each channel as data $V_i$ acquired in the detection area of the each channel minus the average value $\overline{V}(n)$ and then divided by the gain calibration coefficient $a_i$ of the each channel.

In some examples useful for understanding the present invention, the updating the image data for the inspected object received, based on the calibration data for the calibration source received includes:

measuring a voltage value $V_{air}(i)$ of air by using the millimeter wave/terahertz wave detector array, ie[1, number of channels], and calculating an average voltage value $\overline{V_{air}}$ of the air in all channels;

setting a temperature of the calibration source to have a difference from a temperature of the air, measuring a voltage value $V_{cal}(i)$ of the calibration source by using the millimeter wave/terahertz wave detector array, ie[1, number of channels], calculating an average voltage value $\overline{V_{cal}}$ of the calibration source of all the channels, and calculating a gain calibration coefficient $a_i$ and an offset calibration coefficient $b_i$ of each channel by equations of:

$$\overline{V}_{air} = a_i \times T_{air}(i) + b_i$$

$$\overline{V}_{cal} = a_i \times T_{air}(i) + b_i$$

calculating calibrated data in the detection area of the each channel as an absolute value of $(V_i - \overline{V}_{cal}) - / (\overline{V}_{air} - \overline{V}_{cal})$, where $V_i$ is data acquired in the detection area of the each channel.

## BRIEF DESCRIPTION OF THE ACCOMPANYING DRAWINGS

FIG. 1 shows a schematic structural diagram of a millimeter wave/terahertz wave imaging apparatus according to an embodiment of the present disclosure;
FIG. 2 shows a data acquisition timing diagram of the millimeter wave/terahertz wave imaging apparatus shown in FIG. 1;
FIG. 3 shows a flowchart of a method of detecting a human body or an article by using a millimeter wave/terahertz wave imaging apparatus according to an embodiment of the present disclosure;
FIG. 4 shows a schematic structural diagram of a millimeter wave/terahertz wave imaging apparatus according to another embodiment of the present disclosure;
FIG. 5 shows a data acquisition timing diagram of the millimeter wave/terahertz wave imaging apparatus shown in FIG. 4;
FIG. 6 shows a schematic installation diagram of a reflector according to an exemplary embodiment of the present disclosure;
FIG. 7 shows a side view of the reflector shown in FIG. 6;
FIG. 8 shows a flowchart of a method of calibrating a millimeter wave/terahertz wave imaging apparatus according to an embodiment of the present disclosure;
FIG. 9 shows a relationship between a temperature sensitivity and an integration time; and
FIG. 10 shows a schematic diagram of lens imaging.

## DETAILED DESCRIPTION

Although the present disclosure will be fully described with reference to the drawings containing the preferred embodiments of the present disclosure, it should be understood that those skilled in the art may modify the present disclosure while obtaining the technical effects of the present disclosure. Therefore, it should be understood that the above description is a broad disclosure for those ordinary skilled in the art, and its content is not intended to limit the exemplary embodiments described in the present disclosure.

In addition, in the following detailed description, for the convenience of explanation, many specific details are set forth to provide a comprehensive understanding of the embodiments of the present disclosure. Obviously, however, one or more embodiments may also be implemented without these specific details. In other cases, well-known structures and devices are shown in diagrammatic form to simplify the drawings.

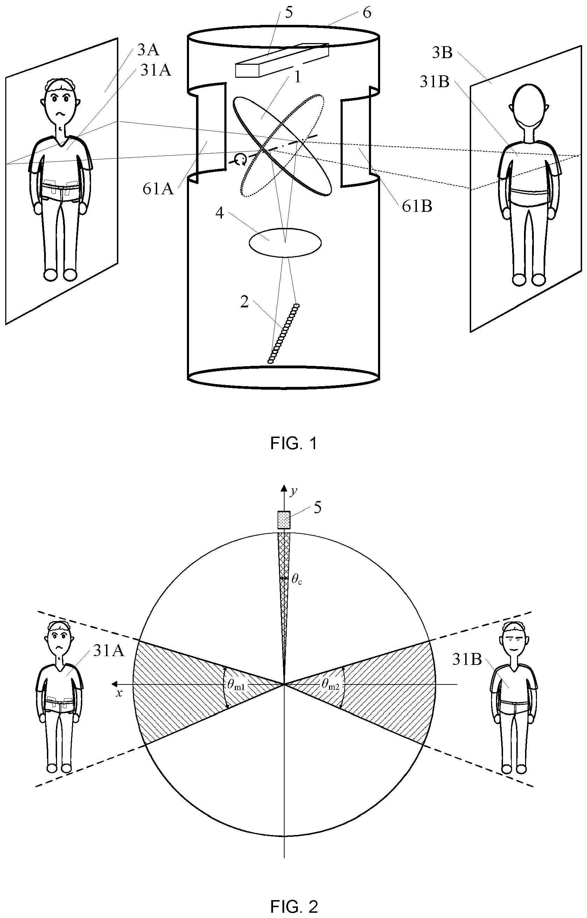

FIG. 1 schematically shows a millimeter wave/terahertz wave imaging apparatus according to an exemplary embodiment of the present disclosure. As shown in FIG. 1, the millimeter wave/terahertz wave imaging apparatus includes a quasi-optical assembly and a millimeter wave/terahertz wave detector array 2. The quasi-optical assembly is adapted to reflect and converge a millimeter wave/terahertz wave radiated by a first inspected object 31A and a second inspected object 31B to the millimeter wave/terahertz wave detector array 2. The quasi-optical assembly includes an elliptical reflector 1 and a focusing lens 4, and the first inspected object 31A and the second inspected object 31B are respectively located on opposite sides of the reflector 1. The reflector 1 is rotatable about a horizontal axis so as to respectively receive and reflect a millimeter wave/terahertz wave from parts of the first inspected object 31A at different vertical positions of a first field of view 3A and a millimeter wave/terahertz wave from parts of the second inspected object 31B at different vertical positions of a second field of view 3B. The focusing lens 4 is adapted to converge the millimeter wave/terahertz wave from the reflector 1. The millimeter wave/terahertz wave detector array 2 is adapted to receive the millimeter wave/terahertz wave reflected and converged by the quasi-optical assembly. The number of detectors in the millimeter wave/terahertz wave detector array 2 is determined according to a required size of the field of view 3A, 3B and a required resolution. An arrangement direction of the millimeter wave/terahertz wave detector array 2 is perpendicular to a normal line of the field of view and parallel to the horizontal plane. A size of the detector is determined according to a wavelength, processing technology and required sampling density.

When in use, the reflector 1 is driven to rotate. When the reflector 1 rotates to a first detection area, image data for the first inspected object 31A is received by the millimeter wave/terahertz wave detector array 2. When the reflector 1 rotates to a second detection area, image data for the second inspected object 31B is received by the millimeter wave/terahertz wave detector array 2. By rotating the reflector 1 around the horizontal axis, the millimeter wave/terahertz wave imaging apparatus according to the embodiment of the present disclosure may simultaneously image both inspected objects 31A, 31B located on both sides of the reflector 1, thereby improving detection efficiency with a simple control and a low cost. In addition, the millimeter wave/terahertz wave imaging apparatus has a simple structure and a small footprint.

In this embodiment, during the rotation of the reflector 1, a horizontal direction facing the first detection area is a 0° field of view, and a horizontal direction facing the second detection area is a 180° field of view. When the reflector 1 rotates once, the timing diagram shown in FIG. 2 is obtained, where $\theta_{m1}$ is a field angle corresponding to the first detection area, and $\theta_{m2}$ is a field angle corresponding to the second detection area.

As shown in FIG. 1, in an exemplary embodiment, the millimeter wave/terahertz wave imaging apparatus further includes a housing 6. The quasi-optical assembly and the millimeter wave/terahertz wave detector array 2 are located within the housing 6. A first window 61A for the millimeter wave/terahertz wave radiated by the first inspected object 31A to pass through and a second window 61B for the millimeter wave/terahertz wave radiated by the second inspected object 31B to pass through are respectively provided on opposite sidewalls of the housing 6.

As shown in FIG. 1, in an exemplary embodiment, the millimeter wave/terahertz wave imaging apparatus further includes a data processing device (not shown). The data processing device is wirelessly or wiredly connected to the millimeter wave/terahertz wave detector array 2 so as to respectively receive the image data for the first inspected object 31A and the image data for the second inspected object 31B received by the millimeter wave/terahertz wave detector array 2.

As shown in FIG. 1 and FIG. 2, in an exemplary embodiment, the millimeter wave/terahertz wave imaging apparatus further includes a calibration source 5 located within the housing 6 and on an object plane of the quasi-optical assembly, so that when the reflector 1 rotates to a calibration area, the millimeter wave/terahertz wave detector array 2 receives calibration data for the calibration source 5. The data processing device receives the calibration data for the calibration source 5 received by the millimeter wave/terahertz wave detector array 2, and updates the image data for the first inspected object 31A and the image data for the second inspected object 31B in real time based on the calibration data received. Since the calibration source 5 is encapsulated inside the housing 6, the millimeter wave/terahertz wave imaging apparatus may be calibrated more stably and reliably than using remote air. The calibration source 5 may be a wave absorbing material with an emissivity close to 1, such as plastic or foam. In addition, the calibration source 5 may also be a black body or a semiconductor refrigerator.

In this embodiment, a position of a center of the calibration source 5 is a 90° field of view, and $\theta_c$ is a field of view corresponding to the calibration area. When the reflector 1 rotates to the calibration area, a wave beam radiated by the calibration source 5 is received directly by the millimeter wave/terahertz wave detector array 2. However, it should be noted that the position of the center of the calibration source 5 may also be other angles of field of view, such as 60°, 75°, etc., as long as the millimeter wave/terahertz wave detector array 2 may receive the calibration data for the calibration source 5 and the image data for the inspected objects 31A and 31B without interfering with each other. Then, the millimeter wave/terahertz wave radiated by the calibration source 5 may be reflected to the millimeter wave/terahertz wave detector array 2 through the reflector 1. In this way, a calibration of a complete receiving channel including the focusing lens 4 and the detector may be realized, which further ensures the channel consistency.

It should be noted that although the wave beam in this embodiment is the millimeter wave or terahertz wave spontaneously radiated by the inspected objects 31A, 31B, those skilled in the art should understand that the wave beam may also be a millimeter wave/terahertz wave irradiated to and then reflected by the inspected objects 31A, 31B.

According to the Nyquist sampling theory, at least two sampling points within a half-power beam width may completely restore an image. In this embodiment, the arrangement direction of the millimeter wave/terahertz wave detector array 2 is perpendicular to the normal line of the field of view and parallel to the horizontal plane so as to sample the field of view in a height direction. An arrangement density of the millimeter wave/terahertz wave detector array 2 determines a sampling density. An image produced by a millimeter wave imaging system is actually a grayscale image.

When a spatial sampling rate does not meet the Nyquist sampling requirement (that is, in a case of under-sampling), a target scene may still be imaged, but an imaging effect is relatively poor. In order to compensate for a pixel loss caused by the under-sampling, an interpolation algorithm may be used to increase a data density in a later signal processing.

As shown in FIG. 1, in an exemplary embodiment, a length direction of the calibration source 5 is parallel to the rotation axis of the reflector 1, a length of the calibration source 5 is greater than or equal to a size of the field of view of the millimeter wave/terahertz wave detector array 2 in a direction parallel to the rotation axis, and a width of the calibration source 5 is 10 times an antenna beam width of the millimeter wave/terahertz wave detector 2. However, it should be noted that the width of the calibration source 5 may also be 1 or 2 times or other multiples of the antenna beam width of the millimeter wave/terahertz wave detector array.

In an exemplary embodiment, the imaging apparatus may further include a display device connected to the data processing device and adapted to receive and display a millimeter wave/terahertz wave image from the data processing device.

In an embodiment, the millimeter wave/terahertz wave imaging apparatus further includes an optical camera device connected to the display device. The optical camera includes a first optical camera device for capturing an optical image of the first inspected object 31A and a second optical camera device for capturing an optical image of the second inspected object 31B. The optical camera device may realize visible light real-time imaging, and give image information about the first inspected object 31A and the second inspected object 31B to compare with the millimeter wave/terahertz wave image, which may be used for user's reference.

In an exemplary embodiment not shown, the display device includes a display screen, including a first display area for displaying the millimeter wave/terahertz wave images of the first inspected object 31A and the second inspected object 31B and a second display area for displaying the optical images of the first inspected object 31A and the second inspected object 31B captured by the optical camera device, so that a user may compare the optical image captured by the optical camera device with the millimeter wave/terahertz wave image.

In an exemplary embodiment not shown, the millimeter wave/terahertz wave imaging apparatus further includes an alarm device connected to the data processing device. When the data processing device recognizes a suspicious article in the millimeter wave/terahertz wave image of the first inspected object 31A and/or the second inspected object 31B, the alarm device gives an alarm, for example, turns on an alarm light below the millimeter wave/terahertz wave image of the corresponding inspected object. It should be noted that a voice prompt may also be used as the alarm.

In an exemplary embodiment, the data processing device may be used to generate a control signal and transmit the control signal to the driving device 9 to drive the reflector 1 to rotate. In another exemplary embodiment, the imaging apparatus may further include a control device independent of the data processing device.

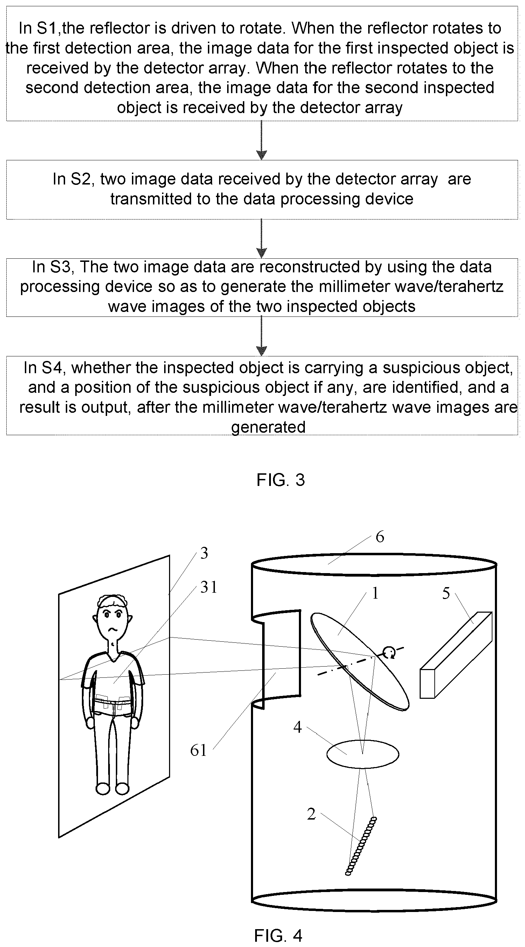

As shown in FIG. 3, the present invention further provides a method of detecting a human body or an article according to claim 6, by using the millimeter wave/terahertz wave imaging apparatus, which includes following steps.

In S1, the reflector 1 is driven to rotate. When the reflector 1 rotates to the first detection area, the image data for the first inspected object 31A is received by the millimeter wave/terahertz wave detector array 2. When the reflector 1 rotates to the second detection area, the image data for the second inspected object 31B is received by the millimeter wave/terahertz wave detector array 2.

In S2, the image data for the first inspected object 31A and the image data for the second inspected object 31B received by the millimeter wave/terahertz wave detector array 2 are transmitted to the data processing device.

In S3, the image data for the first inspected object 31A and the image data for the second inspected object 31B are reconstructed by using the data processing device so as to generate the millimeter wave/terahertz wave image of the first inspected object 31A and the millimeter wave/terahertz wave image of the second inspected object 31B.

This method may simultaneously perform omnidirectional imaging and detection on the two inspected objects 31A and 31B, where the inspected object 31 may be a human body or an article.

According to the invention, the method further includes, prior to the step S3, receiving the calibration data for the calibration source 5 by the millimeter wave/terahertz wave detector array 2 when the reflector 1 rotates to the calibration area; and updating the image data for the first inspected object 31A and the image data for the second inspected object 31B received, based on the calibration data for the calibration source 5 received.

As an exemplary embodiment, the method may further include step S4, in which whether the first inspected object 31A and/or the second inspected object 31B is carrying a suspicious object, and a position of the suspicious object if any, are identified, and a result is output, after the millimeter wave/terahertz wave image of the first inspected object 31A and the millimeter wave/terahertz wave image of the second inspected object 31B are generated.

In the steps described above, the identifying the suspicious object and the position thereof may be performed by a computer automatic identification or a manual identification or a combination thereof. The outputting the result may be realized by, for example, displaying on the display device a conclusion that directly shows whether a suspicious object is contained, or by directly printing or transmitting the result of detection.

The security personnel performing the inspection may determine whether the human body or the article contains the suspicious object and the position of the suspicious object if any, based on the result of detection given in the step S4 described above, or may conduct a further inspection manually.

FIG. 4 schematically shows a millimeter wave/terahertz wave imaging apparatus according to an exemplary embodiment of the present disclosure. As shown, the millimeter wave/terahertz wave imaging apparatus includes a housing 6 as well as a quasi-optical assembly, a calibration source 5 and a millimeter wave/terahertz wave detector array 2 located within the housing 6. The housing 6 is provided with a window 61 for the millimeter wave/terahertz wave spontaneously radiated by the inspected object 31 to pass through. The quasi-optical assembly is adapted to reflect and converge the millimeter wave/terahertz wave from the inspected object 31 to the millimeter wave/terahertz wave detector array 2, and includes an elliptical reflector 1 adapted to receive and reflect the millimeter wave/terahertz wave from the inspected object 31 as well as a focusing lens 4 adapted to converge the millimeter wave/terahertz wave from the reflector 1. The reflector 1 is rotatably connected to the housing 6 so as to reflect the millimeter wave/terahertz wave from parts of the inspected object 31 at different positions in the field of view 3. The millimeter wave/terahertz wave detector array 2 is adapted to receive the millimeter wave/terahertz wave reflected and converged by the quasi-optical assembly. The number of detectors in the millimeter wave/terahertz wave detector array 2 is determined according to a required size of the field of view 3 and a required resolution. An arrangement direction of the millimeter wave/terahertz wave detector array 2 is perpendicular to the normal line of the field of view and parallel to the horizontal plane. A size of the detector is determined according to a wavelength, processing technology and required sampling density. The calibration source 5 may be a wave absorbing material with an emissivity close to 1, such as plastic or foam. The millimeter wave/terahertz wave radiated by the calibration source 5 may be reflected by the reflector 1 onto the millimeter wave/terahertz wave detector array 2. The imaging apparatus further includes a data processing device (not shown). The data processing device is wirelessly or wiredly connected to the millimeter wave/terahertz wave detector array 2 so as to receive the image data for the inspected object 31 and the calibration data for the calibration source 5 received by the millimeter wave/terahertz wave detector array 2, and update the image data for the inspected object 31 based on the calibration data.

When in use, the reflector 1 is driven to rotate. When the reflector 1 rotates to the detection area, the image data for the inspected object 31 is received by the millimeter wave/terahertz wave detector array 2. When the reflector 1 rotates to the calibration area, the calibration data for the calibration source 5 is received by the millimeter wave/terahertz wave detector array 2. Then, the image data for the inspected object 31 received is updated based on the calibration data for the calibration source 5 received. Since the calibration source 5 is encapsulated inside the housing 6, the millimeter wave/terahertz wave imaging apparatus according to the embodiment of the present disclosure may be calibrated more stably and reliably than using remote air, and real-time calibration may be realized.

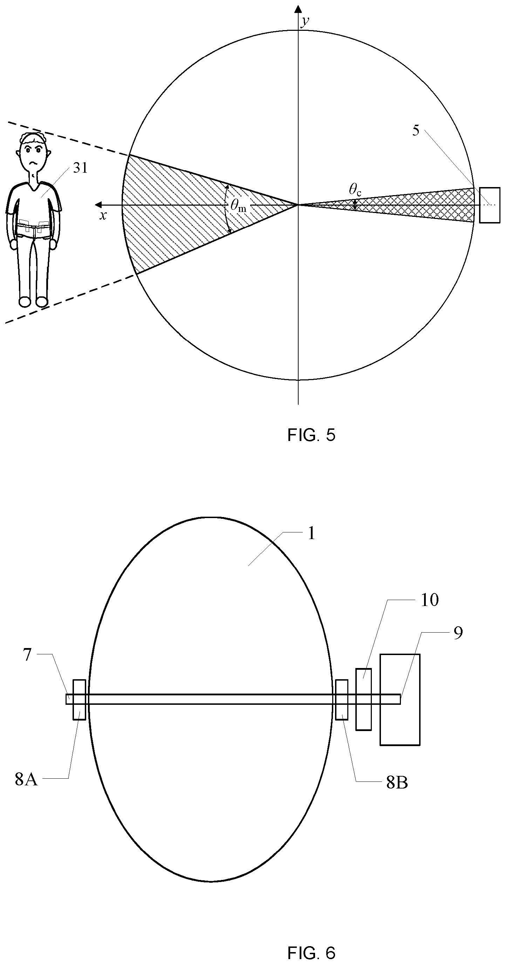

In this embodiment, during the rotation of the reflector 1, a horizontal direction facing the detection area is the 0° field of view, and the position of the center of the calibration source 5 is the 180° field of view. When the reflector 1 rotates once, the timing diagram shown in FIG. 5 is obtained, where $\theta_m$ is the field angle corresponding to the detection area, and $\theta_c$ is the field angle corresponding to the calibration area. However, it should be noted that the position of the center of the calibration source 5 may also be other angles of field of view, such as 120°, 135°, etc., as long as the millimeter wave/terahertz wave detector array 2 may receive the calibration data for the calibration source 5 and the image data for the inspected object 31 without interfering with each other. Then, the wave beam radiated by the calibration source 5 is reflected to the millimeter wave/terahertz wave detector array 2 through the reflector 1. In this way, the calibration of a complete receiving channel including the focusing lens 4 and the detector may be realized, which further ensures the channel consistency. In addition, in some embodiments, the position of the center of the calibration source 5 may also be a 90° field of view. In this case, when the reflector 1 rotates to the vertical position, the wave beam radiated by the calibration source 5 may be received directly by the millimeter wave/terahertz wave detector array 2.

It should be noted that although the wave beam in this embodiment is the millimeter wave or terahertz wave spontaneously radiated by the inspected object 31, those skilled in the art should understand that the wave beam may also be a millimeter wave/terahertz wave irradiated to and then reflected by the inspected object 31. In addition, the calibration source 5 may also be a black body or a semiconductor refrigerator.

As shown in FIG. 4, in an exemplary embodiment, the length direction of the calibration source 5 is parallel to the rotation axis of the reflector 1, the length of the calibration source 5 is greater than or equal to a size of the field of view of the millimeter wave/terahertz wave detector array 2 in a direction parallel to the rotation axis, and the width of the calibration source 5 is 10 times an antenna beam width of the millimeter wave/terahertz wave detector array 2. However, it should be noted that the width of the calibration source 5 may also be 1 or 2 times or other multiples of the antenna beam width of the millimeter wave/terahertz wave detector array 2.

In the exemplary embodiments shown in FIG. 1 and FIG. 4, the rotation axis of the reflector 1 is arranged horizontally, so that the millimeter wave/terahertz wave from parts of the inspected object 31 or 31A, 31B at different vertical positions in the field of view is reflected by the reflector 1. It should be noted that in some other embodiments of the present disclosure, the rotation axis of the reflector 1 may also be arranged vertically, so that the beam of the millimeter wave/terahertz wave from parts of the inspected object 31 or 31A, 31B at different horizontal positions in the field of view is reflected by the reflector 1.

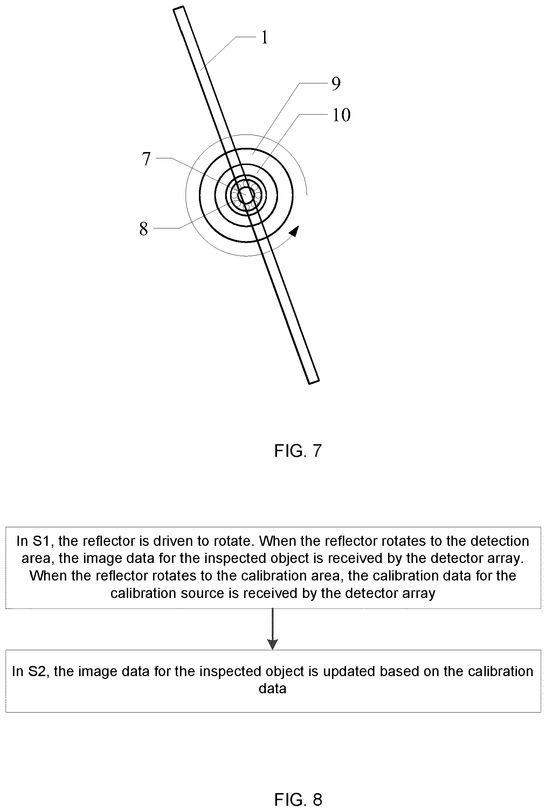

As shown in FIG. 6 and FIG. 7, in an exemplary embodiment, a rotating shaft 7 is provided on the back of the reflector 1. The rotating shaft 7 coincides with a short axis of the elliptical reflector 1, and both ends of the rotating shaft 7 are rotatably connected to the housing 6 through bearings 8A and 8B, so that the reflector 1 may rotate to reflect the wave beams from parts of the inspected object 31 at different positions in the field of view 3. However, it should be noted that in some other embodiments of the present disclosure, rotating shafts may also be provided at both ends of the reflector 1 so that the reflector 1 is rotatably connected to the housing 6 through the two rotating shafts.

As shown in FIG. 6 and FIG. 7, in an exemplary embodiment, the millimeter wave/terahertz wave imaging apparatus further includes a driving device 9, such as a servo motor, adapted to drive the rotating shaft 7 to rotate,.

As shown in FIG. 6 and FIG. 7, in an exemplary embodiment, the millimeter wave/terahertz wave imaging apparatus further includes an angular displacement measuring mechanism 10, such as a photoelectric code disk, for detecting an angular displacement of the reflector 1 in real time so as to accurately calculate a posture of the reflector 1. This may reduce a difficulty in the development of control algorithms and imaging algorithms to a considerable extent.

According to another aspect of the present disclosure, there is further provided a method of calibrating a millimeter wave/terahertz wave imaging apparatus, as shown in FIG. 8, including following steps.

In step S1, the reflector 1 is driven to rotate. When the reflector 1 rotates to the detection area, the image data for the inspected object 31 or the inspected objects 31A, 31B is received by the millimeter wave/terahertz wave detector array 2. When the reflector 1 rotates to the calibration area, the calibration data for the calibration source 5 is received by the millimeter wave/terahertz wave detector array 2.

In step S2, the image data for the inspected object 31 or the inspected objects 31A, 31B received is updated based on the calibration data for the calibration source 5 received.

An output voltage $V_{out}$ of the detection corresponds to an antenna temperature of $T_A$, which should satisfy Equation (1).

$$T_A = (V_{out} - b) / a \qquad (1)$$

where a is the gain calibration coefficient, and b is the offset calibration coefficient.

Therefore, in the step S2, the updating the received image data for the inspected object 31 or the inspected objects 31A, 31B based on the received calibration data for the calibration source 5 includes a correction of the offset calibration coefficient b and a correction of the gain calibration coefficient a.

In the calibration area, a radiation brightness temperature of the calibration source 5 and its surrounding environment may be regarded as uniform, that is, the antenna temperature $T_A$ of all channels is the same. When the channels are exactly the same, an output $V_{out}$ of the focal plane array receiving channel should be exactly the same. If the output is inconsistent, the gain calibration coefficient a and the offset calibration coefficient b of each channel need to be adjusted to make the output of all the channels consistent, so as to achieve the adjustment of the channel consistency. The gain calibration parameter a reflects a total gain and an equivalent bandwidth of the channel. This part has been carefully adjusted when the channel is debugged. It may be considered that the gain calibration coefficient a of each channel is approximately equal. Therefore, during normal use, the calibration is achieved by adjusting the offset calibration coefficient b.

In an exemplary embodiment, the updating the received image data for the inspected object 31 or the inspected objects 31A, 31B based on the received calibration data of the calibration source 5 mainly includes a real-time correction of the offset calibration coefficient b, including following steps.

In step A1, an average value $\overline{V}$ of a plurality of measurement output voltages of all channels of the millimeter wave/terahertz wave detector array in the calibration area is calculated.

In step A2, calibrated data in the detection area of each channel is calculated as data $V_i$ acquired in the detection area of the each channel minus the average value $\overline{V}$ and then divided by the gain calibration coefficient $a_i$ of the each channel.

This method may perform an overall calibration on the receiving channel array of the focal plane array system. The calibration algorithm only requires a simple calculation, consumes very little time, and may achieve real-time calibration. The calibration of the channel consistency is performed on each image.

When the imaging apparatus is in long-term operation or when the place of use is changed, due to a deterioration of the system performance caused by a temperature drift of the system, the gain calibration coefficient a of each channel usually changes. In this case, it is necessary to adjust the gain calibration coefficient a and the offset calibration coefficient b of the channel, which specifically includes following steps.

In step B1, the millimeter wave/terahertz wave detector array is used to measure the voltage value $V_{air}(i)$ of the air, $i \in [1,$ number of channels], and the average voltage value $\overline{V}_{air}$ of the air in all channels is calculated.

In step B2, the temperature of the calibration source is set to have a difference from the temperature of the air.

The millimeter wave/terahertz wave detector array is used to measure the voltage value $V_{cal}(i)$ of the calibration source, i E [1, number of channels], the average voltage value $V_{cal}$ of the calibration source of all the channels is calculated, and the gain calibration coefficient $a_i$ and the offset calibration coefficient $b_i$ of the each channel is calculated by Equation (2) and Equation (3).

$$\overline{V}_{air} \ = \ \mathrm{a}_j \ \times \ T_{air}\left(i\right) \ + \ b_j \qquad (2)$$

$$\overline{V}_{cal} \ = \ \mathrm{a}_j \ \times \ T_{air}\left(i\right) \ + \ b_j \qquad (3)$$

In step B3, the calibrated data in the detection area of the each channel is calculated as an absolute value of $(V_i - \overline{V}_{cal}) - I\ (\overline{V}_{air} - \overline{V}_{cal})$, where $V_i$ is the data acquired in the detection area of the each channel.

The data processing device acquires twice in each 3dB beam azimuth. In this way, in the embodiments shown in FIG. 1 and FIG. 4, each channel obtains at least 10 acquired data in the calibration area. The output voltage data in the calibration area and the output voltage data in the detection area are both stored in the same data table of the data processing device.

A sampling density in the height direction is determined by a beam dwell time, and one image is output when the reflector 1 rotates once. Assuming that the detector has an angular resolution of $\theta_{res}$, the number of 3dB beams contained in one revolution of the reflector 1 is

$$n = 360^{\circ} \ / \ \theta_{res} \qquad (4)$$

Assuming that the imaging rate is required to be m Hz, an average dwell time $\tau_d$ of each sampling beam in the height direction is

$$\tau_d \ = \ \frac{1}{m} \frac{1}{n} \qquad (5)$$

For example, if the imaging is distanced from the system by 3000 mm, the angular resolution $\theta_{res}$ = 0.57°, the object resolution $\delta$=30 mm , and the imaging rate is 8 Hz, then it may be calculated that the number of beams in the rotation direction is about 632, and the average dwell time for each wave beam is $\tau_d$ = 125ms / 632 = 198$\mu s$. The driving device 9 controls the reflector 1 to move at a uniform speed, therefore its rotation angular velocity is $\omega$ = 16$\pi$ rad / s.

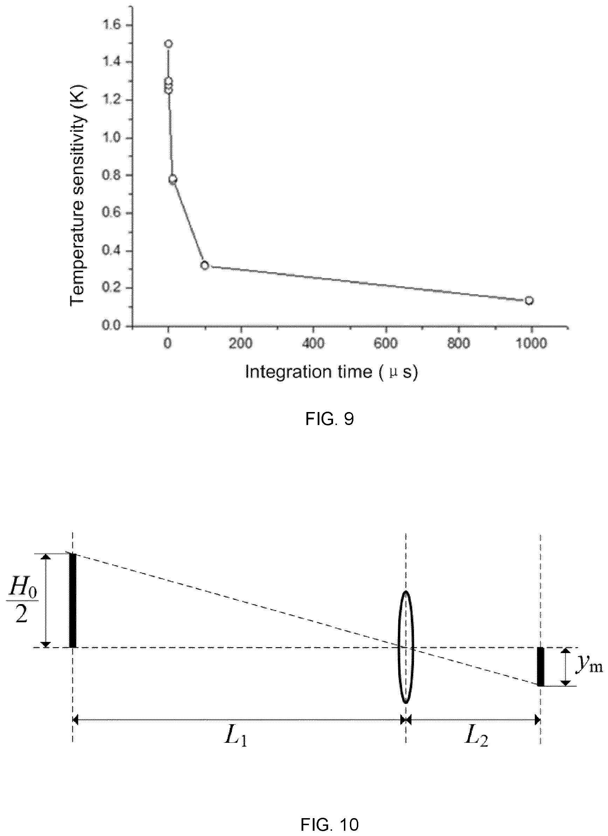

FIG. 9 shows a relationship between a typical detector temperature sensitivity and an integration time. When the integration time is selected as 200 $\mu s$, it corresponds to the temperature sensitivity of ~0.2K. In order to obtain a good signal-to-noise ratio, the temperature sensitivity shall be less than or equal to 0.5K. Therefore, the millimeter wave/terahertz wave imaging apparatus may meet this requirement.

Assuming that the number of detectors is N and a distance between centers of two adjacent detectors is d, a maximum offset distance $y_m$ of the detector is calculated by Equation (6)

$$y_m = d \ \frac{N}{2} \qquad (6)$$

Accordingly, a static field of view $H_0$ of the millimeter wave/terahertz wave detector array 2 may be calculated. As shown in FIG. 10, the static field of view $H_0$ of the millimeter wave/terahertz wave detector array 2, an object distance $L_1$ and an image distance $L_2$ need to satisfy Equation (7)

$$\frac{L_1}{L_2} = \frac{H_0 \ / \ 2}{y_m} \qquad (7)$$

In an exemplary embodiment, the number of detectors N is 30, and the detectors are arranged in a column. The distance d between the centers of two adjacent detectors is 7 mm, and a length $2y_m$ of the detector array is 21 cm. The object distance $L_1$ is 3.5 m, and the image distance $L_2$ is 0.7 m. It may be calculated according to Equation (7) that the static field of view $H_0$=105 cm. Assuming that a size of the detection area in the height direction is 1.8 m, a scanning angle $\theta_m$ in the height direction for reconstructing the image is 34°. The horizontal direction of the reflector 1 facing the detection area during the rotation of the reflector 1 is defined as 0° field of view. The data between 5° upward swing and (17-5)° downward swing of the reflector may be selected for imaging, so that the angle of the downward swing of the reflector 1 is approximately twice the angle of the upward swing, and the detector is calibrated when the reflector 1 is located at 142°~148°.

In an exemplary embodiment, the number of detectors $N$ is 48, and the detectors are arranged in a column. The distance d between the centers of two adjacent detectors is 3 mm, and the length $2y_m$ of the detector array is 14.4cm. The object distance $L_1$ is 5 m, and the image distance $L_2$ is 0.7 m. It may be calculated according to Equation (7) that the static field of view $H_0$=103 cm. Assuming that the size of the detection area in the height direction is 1.8 m, the scanning angle $\theta_m$ in the height direction for reconstructing the image is 20°. The horizontal direction of the reflector 1 facing the detection area during the rotation of the reflector 1 is defined as 0° field of view. The data between 3.5° upward swing and (10-3.5)° downward swing of the reflector may be selected for imaging, so that the angle of the downward swing of the reflector 1 is approximately twice the angle of the upward swing, and the detector is calibrated when the reflector 1 is located at 142°~148°.

Those skilled in the art may understand that the embodiments described above are exemplary, and those skilled in the art may make improvements as long as they fall within the scope of the invention as disclosed in the appended claims.

After describing the preferred embodiments of the present disclosure in detail, those skilled in the art may clearly understand that various changes and modifications may be made as long as they are not departing from the scope of the appended claims, and the present disclosure is not limited to the exemplary embodiments described in the present disclosure.

## Claims

1.  A millimeter wave/terahertz wave imaging apparatus, comprising a quasi-optical assembly, a millimeter wave/terahertz wave detector array (2), a data processing device and a calibration source (5),

    wherein the quasi-optical assembly is configured to reflect a millimeter wave/terahertz wave radiated or reflected by a first inspected object (31A) and a second inspected object (31B) and converge the millimeter wave/terahertz wave onto the millimeter wave/terahertz wave detector array (2),
    wherein the quasi-optical assembly comprises a reflector (1); the first inspected object (31A) and the second inspected object (31B) are respectively located on opposite sides of the reflector (1), and the reflector (1) is rotatable about a horizontal axis to respectively receive and reflect a millimeter wave/terahertz wave from parts of the first inspected object (31A) at different vertical positions of a first field of view (3A) and a millimeter wave/terahertz wave from parts of the second inspected object (31B) at different vertical positions of a second field of view (3B);
    wherein the millimeter wave/terahertz wave detector array (2) is configured to receive the millimeter wave/terahertz wave from the quasi-optical assembly;
    wherein the data processing device is connected to the millimeter wave/terahertz wave detector array (2) so as to respectively receive image data for the first inspected object (31A) and image data for the second inspected object (31B) from the millimeter wave/terahertz wave detector array (2) and generate respective millimeter wave/terahertz wave images; and
    **characterized in that** the calibration source (5) is provided on an object plane of the quasi-optical assembly, wherein the data processing device is configured to receive calibration data for the calibration source (5) from the millimeter wave/terahertz wave detector array (2), and update the image data for the first inspected object (31A) and the image data for the second inspected object (31B) based on the calibration data received,
    wherein a length direction of the calibration source (5) is parallel to the horizontal axis of the reflector (1), and a length of the calibration source (5) is greater than or equal to a size of a field of view of the millimeter wave/terahertz wave detector array (2) in a direction parallel to the horizontal axis.

2.  The millimeter wave/terahertz wave imaging apparatus of claim 1, further comprising a housing (6), wherein the quasi-optical assembly and the millimeter wave/terahertz wave detector array (2) are located within the housing (6), and a first window (61A) for the millimeter wave/terahertz wave from the first inspected object (31A) to pass through and a second window (61B) for the millimeter wave/terahertz wave from the second inspected object (31B) to pass through are provided respectively on opposite sidewalls of the housing (6).

3. The millimeter wave/terahertz wave imaging apparatus of any one of claims 1 to 2, further comprising:
a display device connected to the data processing device and configured to receive and display the millimeter wave/terahertz wave images from the data processing device.

4. The millimeter wave/terahertz wave imaging apparatus of any one of the preceding claims, further comprising an optical camera device, wherein the optical camera device comprises a first optical camera device configured to capture an optical image of the first inspected object (31A) and a second optical camera device configured to capture an optical image of the second inspected object (31B), and the first optical camera device and the second optical camera device are connected to the display device.

5. The millimeter wave/terahertz wave imaging apparatus of claim 4, wherein the display device comprises a display screen comprising a first display area for displaying the millimeter wave/terahertz wave image and a second display area for displaying the optical image captured by the optical camera device; or
an alarm device connected to the data processing device and configured to give an alarm indicating that the millimeter wave/terahertz wave image contains a suspicious object, when the data processing device recognizes the suspicious object in the millimeter wave/terahertz wave image.

6. A method of detecting a human body or an article by using the millimeter wave/terahertz wave imaging apparatus of any one of claims 1 to 5, comprising:

    step S1 of driving a reflector (1) to rotate around a horizontal axis, receiving image data for a first inspected object (31A) by a millimeter wave/terahertz wave detector array (2) when the reflector (1) rotates to a first detection area, and receiving image data for a second inspected object (31B) by the millimeter wave/terahertz wave detector array (2) when the reflector (1) rotates to a second detection area;
    step S2 of transmitting the image data for the first inspected object (31A) and the image data for the second inspected object (31B) received by the millimeter wave/terahertz wave detector array (2) to a data processing device; and
    step S3 of reconstructing the image data for the first inspected object (31A) and the image data for the second inspected object (31B) by using the data processing device so as to generate a millimeter wave/terahertz wave image of the first inspected object (31A) and a millimeter wave/terahertz wave image of the second inspected object (31B),
    **characterized in that** the method further comprises: prior to the step S3,
    receiving calibration data for a calibration source (5) by the millimeter wave/terahertz wave detector array (2) when the reflector (1) rotates to a calibration area; and
    updating the image data for the first inspected object (31A) and the image data for the second inspected object (31B) received, based on the calibration data for the calibration source (5) received.

7. The method of claim 6, wherein the updating the image data for the first inspected object (31A) and the image data for the second inspected object (31B) received, based on the calibration data for the calibration source (5) received, comprises:

    calculating an average value $\overline{V}$ of a plurality of measurement output voltages of all channels of the millimeter wave/terahertz wave detector array (2) in the calibration area; and
    calculating calibrated data in a detection area of each channel as data $V_i$ acquired in the detection area of the each channel minus the average value $\overline{V}$ and then divided by a gain calibration coefficient $a_i$ of the each channel; or
    wherein the updating the image data for the first inspected object (31A) and the image data for the second inspected object (31B) received, based on the calibration data for the calibration source (5) received comprises:

    measuring a voltage value $V_{air}(1)$ of air by using the millimeter wave/terahertz wave detector array (2), $i\in[1,$ number of channels], and calculating an average voltage value $\overline{V}_{air}$ of the air in all channels;
    setting a temperature of the calibration source (5) to have a difference from a temperature of the air, measuring a voltage value $V_{cal}(i)$ of the calibration source (5) by using the millimeter wave/terahertz wave detector array (2), $i\in[1,$ number of channels], calculating an average voltage value $V_{cal}$ of the calibration source (5) of all the channels, and calculating a gain calibration coefficient $a_i$ and an offset calibration coefficient $b_i$ of each channel by equations of:

$$\overline{V}_{air} = a_i \times T_{air}(i) + b_i$$

$$\overline{V}_{cal} = a_i \times T_{air}(i) + b_i ;$$

and

calculating calibrated data in the detection area of the each channel as an absolute value of $(V_i - \overline{V}_{cal}) > - / (\overline{V}_{air} - \overline{V}_{cal})$, where $V_i$ is data acquired in the detection area of the each channel.

8. The method of any one of claims 6 to 7, further comprising step S4 of determining whether the first inspected object (31A) and the second inspected object (31B) is carrying a suspicious object, identifying a position of the suspicious object if any, and outputting a result, after generating the millimeter wave/terahertz wave image of the first inspected object (31A) and the millimeter wave/terahertz wave image of the second inspected object (31B).

**Patentansprüche**

1. Vorrichtung zur Bildgebung von Millimeterwellen/Terahertzwellen, umfassend eine quasioptische Anordnung, eine Millimeterwellen/Terahertzwellen-Detektorarray (2), eine Datenverarbeitungseinrichtung und eine Kalibrierquelle (5),

wobei die quasioptische Anordnung so konfiguriert ist, dass sie eine von einem ersten zu prüfenden Objekt (31A) und einem zweiten zu prüfenden Objekt (31B) ausgestrahlte oder reflektierte Millimeterwelle/Terahertzwelle reflektiert und die Millimeterwelle/Terahertzwelle auf die Millimeterwellen/Terahertzwellen-Detektorarray (2) fokussiert,

wobei die quasioptische Anordnung einen Reflektor (1) umfasst; das erste zu prüfende Objekt (31A) und das zweite zu prüfende Objekt (31B) sind jeweils auf gegenüberliegenden Seiten des Reflektors (1) angeordnet, und der Reflektor (1) ist um eine horizontale Achse drehbar, um jeweils eine Millimeterwelle/Terahertzwelle von Teilen des ersten zu prüfenden Objekts (31A) an unterschiedlichen vertikalen Positionen eines ersten Sichtfelds (3A) und eine Millimeterwelle/Terahertzwelle von Teilen des zweiten zu prüfenden Objekts (31B) an unterschiedlichen vertikalen Positionen eines zweiten Sichtfelds (3B) zu empfangen und zu reflektieren;

wobei die Millimeterwellen/Terahertzwellen-Detektorarray (2) so konfiguriert ist, dass sie die Millimeterwelle/Terahertzwelle von der quasioptischen Anordnung empfängt;

wobei die Datenverarbeitungseinrichtung mit der Millimeterwellen/Terahertzwellen-Detektorarray (2) verbunden ist, um Bilddaten für das erste zu prüfende Objekt (31A) und Bilddaten für das zweite zu prüfende Objekt (31B) von der Millimeterwellen/Terahertzwellen-Detektorarray (2) zu empfangen und entsprechende Millimeterwellen/Terahertzwellen-Bilder zu erzeugen; und

**dadurch gekennzeichnet, dass**

die Kalibrierquelle (5) auf einer Objektebene der quasioptischen Anordnung bereitgestellt ist, wobei die Datenverarbeitungseinrichtung so konfiguriert ist, dass sie Kalibrierungsdaten für die Kalibrierquelle (5) von der Millimeterwellen/Terahertzwellen-Detektorarray (2) empfängt und die Bilddaten für das erste zu prüfende Objekt (31A) und die Bilddaten für das zweite zu prüfende Objekt (31B) basierend auf den empfangenen Kalibrierungsdaten aktualisiert,

wobei eine Längsrichtung der Kalibrierquelle (5) parallel zur horizontalen Achse des Reflektors (1) verläuft und eine Länge der Kalibrierquelle (5) größer oder gleich der Größe eines Sichtfelds der Millimeterwellen/Terahertzwellen-Detektorarray (2) in einer Richtung parallel zur horizontalen Achse ist.

2. Die Millimeterwellen/Terahertzwellen-Bildgebungsvorrichtung nach Anspruch 1, ferner umfassend ein Gehäuse (6), wobei die quasioptische Anordnung und die Millimeterwellen/Terahertzwellen-Detektorarray (2) innerhalb des Gehäuses (6) angeordnet sind und ein erstes Fenster (61A) für die Millimeterwellen/Terahertzwellen vom ersten zu prüfenden Objekt (31A) und ein zweites Fenster (61B) für die Millimeterwellen/Terahertzwellen vom zweiten zu prüfenden Objekt (31B) jeweils an gegenüberliegenden Seitenwänden des Gehäuses (6) vorgesehen sind.

3. Die Millimeterwellen/Terahertzwellen-Bildgebungsvorrichtung nach einem der Ansprüche 1 bis 2, ferner umfassend: eine Anzeigevorrichtung, die mit der Datenverarbeitungseinrichtung verbunden ist und so konfiguriert ist, dass sie die Millimeterwellen/Terahertzwellen-Bilder von der Datenverarbeitungseinrichtung empfängt und anzeigt.

4. Die Millimeterwellen/Terahertzwellen-Bildgebungsvorrichtung nach einem der vorhergehenden Ansprüche, ferner umfassend eine optische Kameravorrichtung, wobei die optische Kameravorrichtung eine erste optische Kameravorrichtung umfasst, die so konfiguriert ist, dass sie ein optisches Bild des ersten zu prüfenden Objekts (31A) aufnimmt, und eine zweite optische Kameravorrichtung umfasst, die so konfiguriert ist, dass sie ein optisches Bild des zweiten zu prüfenden Objekts (31B) aufnimmt, und die erste optische Kameravorrichtung und die zweite optische Kameravorrichtung sind mit der Anzeigevorrichtung verbunden.

5. Die Millimeterwellen/Terahertzwellen-Bildgebungsvorrichtung nach Anspruch 4, wobei die Anzeigevorrichtung einen Anzeigebildschirm umfasst, der einen ersten Anzeigebereich zum Anzeigen des Millimeterwellen/Terahertzwellen-Bildes und einen zweiten Anzeigebereich zum Anzeigen des von der optischen Kameravorrichtung aufgenommenen optischen Bildes umfasst; oder
eine Alarmvorrichtung, die mit der Datenverarbeitungseinrichtung verbunden ist und so konfiguriert ist, dass sie einen Alarm ausgibt, der anzeigt, dass das Millimeterwellen/Terahertzwellen-Bild einen verdächtigen Gegenstand enthält, wenn die Datenverarbeitungseinrichtung den verdächtigen Gegenstand im Millimeterwellen/Terahertzwellen-Bild erkennt.

6. Ein Verfahren zum Erkennen eines menschlichen Körpers oder eines Gegenstands unter Verwendung der Millimeterwellen/Terahertzwellen-Bildgebungsvorrichtung nach einem der Ansprüche 1 bis 5, umfassend:

Schritt S1 eines Antriebs eines Reflektors (1), um sich um eine horizontale Achse zu drehen, wobei Bilddaten für ein erstes zu prüfendes Objekt (31A) durch eine Millimeterwellen/Terahertzwellen-Detektorarray (2) empfangen werden, wenn sich der Reflektor (1) in einen ersten Erfassungsbereich dreht, und Bilddaten für ein zweites zu prüfendes Objekt (31B) durch die Millimeterwellen/Terahertzwellen-Detektorarray (2) empfangen werden, wenn sich der Reflektor (1) in einen zweiten Erfassungsbereich dreht;
Schritt S2 eines Sendens der Bilddaten für das erste zu prüfende Objekt (31A) und der Bilddaten für das zweite zu prüfende Objekt (31B), die von der Millimeterwellen/Terahertzwellen-Detektorarray (2) empfangen wurden, an eine Datenverarbeitungseinrichtung; und
Schritt S3 eines Rekonstruierens der Bilddaten für das erste zu prüfende Objekt (31A) und der Bilddaten für das zweite zu prüfende Objekt (31B) unter Verwendung der Datenverarbeitungseinrichtung, um ein Millimeterwellen/Terahertzwellen-Bild des ersten zu prüfenden Objekts (31A) und ein Millimeterwellen/Terahertzwellen-Bild des zweiten zu prüfenden Objekts (31B) zu erzeugen,
**dadurch gekennzeichnet, dass**
das Verfahren ferner umfasst: vor dem Schritt S3
Empfangen von Kalibrierungsdaten für eine Kalibrierquelle (5) durch die Millimeterwellen/Terahertzwellen-Detektorarray (2), wenn sich der Reflektor (1) in einen Kalibrierbereich dreht; und
Aktualisieren der empfangenen Bilddaten für das erste zu prüfende Objekt (31A) und der empfangenen Bilddaten für das zweite zu prüfende Objekt (31B) basierend auf den empfangenen Kalibrierungsdaten für die Kalibrierquelle (5).

7. Das Verfahren nach Anspruch 6, wobei das Aktualisieren der empfangenen Bilddaten für das erste zu prüfende Objekt (31A) und der empfangenen Bilddaten für das zweite zu prüfende Objekt (31B) basierend auf den empfangenen Kalibrierungsdaten für die Kalibrierquelle (5) umfasst:

Berechnen eines Durchschnittswerts $\overline{V}$ einer Vielzahl von Messausgangsspannungen aller Kanäle der Millimeterwellen/Terahertzwellen-Detektorarray (2) im Kalibrierbereich; und
Berechnen von kalibrierten Daten in einem Erfassungsbereich jedes Kanals als Daten $V_i$, die im Erfassungsbereich jedes Kanals erfasst wurden, abzüglich des Durchschnittswerts $\overline{V}$ und anschließend geteilt durch einen Verstärkungskalibrierkoeffizienten $a_i$ jedes Kanals; oder
wobei das Aktualisieren der empfangenen Bilddaten für das erste zu prüfende Objekt (31A) und der empfangenen Bilddaten für das zweite zu prüfende Objekt (31B) basierend auf den empfangenen Kalibrierungsdaten für die Kalibrierquelle (5) umfasst:

Messen eines Spannungswerts $V_{air}(i)$ der Luft unter Verwendung der Millimeterwellen/Terahertzwellen-Detektorarray (2) i∈ [1, Anzahl der Kanäle] und as Berechnen eines Durchschnittsspannungswerts $\overline{V}_{air}$ der Luft in allen Kanälen;

Einstellen einer Temperatur der Kalibrierquelle (5), um einen Unterschied zu einer Temperatur der Luft zu haben, Messen eines Spannungswerts $V_{cal}$ (*i*) der Kalibrierquelle (5) unter Verwendung der Millimeterwellen/Terahertzwellen-Detektorarray (2) ie [1, Anzahl der Kanäle], Berechnen eines Durchschnittsspannungswerts $\overline{V}_{cal}$ der Kalibrierquelle (5) aller Kanäle und Berechnen eines Verstärkungskalibrierkoeffizienten $a_i$ und eines Offset-Kalibrierkoeffizienten $b_i$ jedes Kanals durch Gleichungen von:

$$\overline{V}_{air} = a_i \times T_{air}(i) + b_i$$

$$\overline{V}_{cal} = a_i \times T_{air}(i) + b_i ;$$

und

Berechnen von kalibrierten Daten im Erfassungsbereich jedes Kanals als absoluter Wert von ($V_i$ - $\overline{V}_{cal}$) - /($\overline{V}_{air}$ - $\overline{V}_{cal}$), wobei $V_i$ Daten sind, die im Erfassungsbereich jedes Kanals erfasst wurden.

8. Verfahren nach einem der Ansprüche 6 bis 7, ferner umfassend Schritt S4 eines Bestimmens, ob das erste zu prüfende Objekt (31A) und das zweite zu prüfende Objekt (31B) einen verdächtigen Gegenstand tragen, das Identifizieren einer Position des verdächtigen Gegenstands, falls vorhanden, und das Ausgeben eines Ergebnisses nach dem Erzeugen des Millimeterwellen/Terahertzwellen-Bildes des ersten zu prüfenden Objekts (31A) und des Millimeterwellen/Terahertzwellen-Bildes des zweiten zu prüfenden Objekts (31B).

## Revendications

1. Appareil d'imagerie à ondes millimétriques/térahertz, comprenant un ensemble quasi-optique, un réseau de détecteurs d'ondes millimétriques/térahertz (2), un dispositif de traitement de données et une source d'étalonnage (5),

dans lequel l'ensemble quasi-optique est conçu pour réfléchir une onde millimétrique/térahertz émise ou réfléchie par un premier objet inspecté (31A) et par un second objet inspecté (31B) et pour faire converger l'onde millimétrique/térahertz sur le réseau de détecteurs d'ondes millimétriques/térahertz (2),

dans lequel l'ensemble quasi-optique comprend un réflecteur (1); le premier objet inspecté (31A) et le second objet inspecté (31B) sont respectivement situés sur les côtés opposés du réflecteur (1), et le réflecteur (1) peut tourner autour d'un axe horizontal pour recevoir et réfléchir respectivement une onde millimétrique/térahertz provenant de parties du premier objet inspecté (31A) à différentes positions verticales d'un premier champ de vision (3A) et une onde millimétrique/térahertz provenant de parties du second objet inspecté (31B) à différentes positions verticales d'un second champ de vision (3B);

dans lequel le réseau de détecteurs d'ondes millimétriques/térahertz (2) est conçu pour recevoir les ondes millimétriques/térahertz provenant de l'ensemble quasi-optique;

dans lequel le dispositif de traitement de données est connecté au réseau de détecteurs d'ondes millimétriques/térahertz (2) de manière à recevoir respectivement des données d'image pour le premier objet inspecté (31A) et des données d'image pour le second objet inspecté (31B) en provenance du réseau de détecteurs d'ondes millimétriques/térahertz (2) et à générer des images d'ondes millimétriques/térahertz respectives; et **caractérisé en ce que** la source d'étalonnage (5) est disposée dans un plan de l'objet de l'ensemble quasi-optique, dans lequel le dispositif de traitement de données est configuré pour recevoir des données d'étalonnage pour la source d'étalonnage (5) en provenance du réseau de détecteurs d'ondes millimétriques/térahertz (2) et pour mettre à jour les données d'image pour le premier objet inspecté (31A) et les données d'image pour le deuxième objet inspecté (31B) sur la base des données d'étalonnage reçues,

dans lequel un sens de la longueur de la source d'étalonnage (5) est parallèle à l'axe horizontal du réflecteur (1), et une longueur de la source d'étalonnage (5) est supérieure ou égale à une taille d'un champ de vision du réseau de détecteurs d'ondes millimétriques/térahertz (2) dans une direction parallèle à l'axe horizontal.

2. Appareil d'imagerie à ondes millimétriques/térahertz selon la revendication 1, comprenant en outre un boîtier (6), dans lequel l'ensemble quasi-optique et le réseau de détecteurs d'ondes millimétriques/térahertz (2) sont disposés à l'intérieur du boîtier (6), et une première fenêtre (61A) pour le passage de l'onde millimétrique/térahertz provenant du premier objet inspecté (31A) et une seconde fenêtre (61B) pour le passage de l'onde millimétrique/térahertz provenant du second objet inspecté (31B) sont disposées respectivement sur les parois latérales opposées du boîtier (6).

3. Appareil d'imagerie à ondes millimétriques/térahertz selon l'une quelconque des revendications 1 à 2, comprenant en outre:
un dispositif d'affichage connecté au dispositif de traitement de données et conçu pour recevoir et afficher les images d'ondes millimétriques/térahertz provenant du dispositif de traitement de données.

4. Appareil d'imagerie à ondes millimétriques/térahertz selon l'une quelconque des revendications précédentes, comprenant en outre un dispositif de caméra optique, dans lequel le dispositif de caméra optique comprend un premier dispositif de caméra optique conçu pour capturer une image optique du premier objet inspecté (31A) et un second dispositif de caméra optique conçu pour capturer une image optique du second objet inspecté (31B), et le premier dispositif de caméra optique et le second dispositif de caméra optique sont connectés au dispositif d'affichage.

5. Appareil d'imagerie à ondes millimétriques/térahertz selon la revendication 4, dans lequel le dispositif d'affichage comprend un écran d'affichage ayant une première zone d'affichage pour afficher l'image térahertz et une seconde zone d'affichage pour afficher l'image acquise par le système d'acquisition d'images ; ou
un dispositif d'alarme connecté au dispositif de traitement de données et conçu pour émettre une alarme indiquant que l'image à ondes millimétriques/à ondes térahertz contient un objet suspect, lorsque le dispositif de traitement de données reconnaît l'objet suspect dans l'image à ondes millimétriques/à ondes térahertz.

6. Procédé de détection d'un corps humain ou d'un article à l'aide de l'appareil d'imagerie à ondes millimétriques/térahertz selon l'une quelconque des revendications 1 à 5, comprenant:

l'étape S1 qui consiste à faire tourner un réflecteur (1) autour d'un axe horizontal, à recevoir des données d'image pour un premier objet inspecté (31A) par un réseau de détecteurs d'ondes millimétriques/térahertz (2) lorsque le réflecteur (1) tourne vers une première zone de détection, et à recevoir des données d'image pour un second objet inspecté (31B) par le réseau de détecteurs d'ondes millimétriques/térahertz (2) lorsque le réflecteur (1) tourne vers une seconde zone de détection;
l'étape S2 qui consiste à transmettre les données d'image du premier objet inspecté (31A) et les données d'image du second objet inspecté (31B) reçues par le réseau de détecteurs d'ondes millimétriques/térahertz (2) à un dispositif de traitement de données; et
l'étape S3 qui consiste à reconstruire les données d'image du premier objet inspecté (31A) et les données d'image du second objet inspecté (31B) à l'aide du dispositif de traitement de données de manière à générer une image à ondes millimétriques/à ondes térahertz du premier objet inspecté (31A) et une image à ondes millimétriques/à ondes térahertz du second objet inspecté (31B),
**caractérisé en ce que** le procédé comprenant en outre: avant l'étape S3, la réception de données d'étalonnage pour une source d'étalonnage (5) par le réseau de détecteurs d'ondes millimétriques/térahertz (2) lorsque le réflecteur (1) tourne vers une zone d'étalonnage; et
la mise à jour les données d'image du premier objet inspecté (31A) et les données d'image du second objet inspecté (31B) reçues, sur la base des données d'étalonnage pour la source d'étalonnage (5) reçues.

7. Procédé selon la revendication 6, dans laquelle la mise à jour des données d'image du premier objet inspecté (31A) et des données d'image du second objet inspecté (31B) reçues, sur la base des données d'étalonnage de la source d'étalonnage (5) reçues, comprend:

le calcul d'une valeur moyenne $\overline{V}$ d'une pluralité de tensions de sortie de mesure de tous les canaux du réseau de détecteurs d'ondes millimétriques et d'ondes térahertz (2) dans la zone d'étalonnage; et
le calcul des données étalonnées dans une zone de détection de chaque canal en tant que données $V_i$ acquises dans la zone de détection de chaque canal moins la valeur moyenne $\overline{V}$, puis divisées par un coefficient d'étalonnage du gain $a_i$ de chaque canal; ou
dans lequel la mise à jour des données d'image du premier objet inspecté (31A) et des données d'image du second objet inspecté (31B) reçues, sur la base des données d'étalonnage de la source d'étalonnage (5) reçues, comprend:

la mesure d'une valeur de tension $V_{air}(1)$ de l'air à l'aide du réseau de détecteurs d'ondes millimétriques/térahertz (2), i∈[1, nombre de canaux], et le calcul d'une valeur de tension moyenne $V_{air}$ de l'air dans tous les canaux;

le réglage de la température de la source d'étalonnage (5) pour qu'elle diffère d'une température de l'air, la mesure d'une valeur de tension $V_{cal}(i)$ de la source d'étalonnage (5) à l'aide du réseau de détecteurs d'ondes millimétriques et d'ondes térahertz (2), i∈[1, nombre de canaux], le calcul d'une valeur de tension moyenne $\overline{V}_{cal}$ de la source d'étalonnage (5) de tous les canaux, et le calcul d'un coefficient d'étalonnage de gain $a_i$ et un coefficient d'étalonnage de décalage $b_i$ de chaque canal à l'aide des équations suivantes:

$$\overline{V}_{air} \ = \ a_i \ \times \ T_{air}(i) \ + \ b_i$$

$$\overline{V}_{cal} \ = \ a_i \ \times \ T_{air}(i) \ + \ b_i \ ;$$

et

le calcul des données calibrées dans la zone de détection de chaque canal en tant que valeur absolue de $(V_i - V_{cal}) - /(\overline{V}_{air} - \overline{V}_{cal})$, où $V_i$ est les donnée acquises dans la zone de détection de chaque canal.

8. Procédé selon l'une des revendications 6 à 7, comprenant en outre l'étape S4 qui consiste à déterminer si le premier objet inspecté (31A) et le second objet inspecté (31B) portent un objet suspect, à identifier une position de l'objet suspect le cas échéant, et à produire un résultat, après avoir généré l'image à ondes millimétriques/à ondes térahertz du premier objet inspecté (31A) et l'image à ondes millimétriques/à ondes térahertz du second objet inspecté (31B).

FIG. 1

FIG. 2

In S1,the reflector is driven to rotate. When the reflector rotates to the first detection area, the image data for the first inspected object is received by the detector array. When the reflector rotates to the second detection area, the image data for the second inspected object is received by the detector array

In S2, two image data received by the detector array are transmitted to the data processing device

In S3, The two image data are reconstructed by using the data processing device so as to generate the millimeter wave/terahertz wave images of the two inspected objects

In S4, whether the inspected object is carrying a suspicious object, and a position of the suspicious object if any, are identified, and a result is output, after the millimeter wave/terahertz wave images are generated

FIG. 3

FIG. 4

FIG. 5

FIG. 6

FIG. 7

In S1, the reflector is driven to rotate. When the reflector rotates to the detection area, the image data for the inspected object is received by the detector array. When the reflector rotates to the calibration area, the calibration data for the calibration source is received by the detector array

In S2, the image data for the inspected object is updated based on the calibration data

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811654174
- CN 201811654169
- CN 108761552 A